# EUROPÄISCHE PATENTSCHRIFT

(11) **EP 1 534 109 B1**
(45) Veröffentlichungstag und Bekanntmachung des Hinweises auf die Patenterteilung: **15.10.2008**
(21) Anmeldenummer: 03762542.3
(22) Anmeldetag: 28.06.2003
(51) Int. Cl.: A47J 39/00

(54) **SPEISENTRANSPORTBEHÄLTER**
MEAL TRANSPORT CONTAINER
CONTENEUR POUR LE TRANSPORT DE REPAS

(30) Priorität: 04.07.2002 DE 10229947
(43) Veröffentlichungstag der Anmeldung: 01.06.2005
(73) Patentinhaber: BLANCO CS GmbH + Co KG, 75038 Oberderdingen (DE)
(72) Erfinder: HARKE, Stefan, 74889 Sinsheim (DE); REINERT, Harald, 75447 Sternenfels (DE); OBREITER, Gerd, 75196 Remchingen-Singen (DE); HIPP, Wolfram, 75245 Neulingen-Nussbaum (DE); RASTÄTTER, Stefan, 76135 Karlsruhe (DE)
(74) Vertreter: Hoeger, Stellrecht & Partner Patentanwälte
(86) Internationale Anmeldenummer: PCT/EP2003/006873
(87) Internationale Veröffentlichungsnummer: WO 2004/004528

(56) Entgegenhaltungen:
- WO-A-98/25505
- DE-U- 7 527 531
- DE-U- 29 718 827
- US-A- 4 794 228

## Beschreibung

Die vorliegende Erfindung betrifft einen Speisentransportbehälter, der einen Behälterkorpus umfasst, welcher eine Innenschale aus einem Kunststoffmaterial, die einen Behälterinnenraum begrenzt, eine Außenschale, einen zwischen der Innenschale und der Außenschale ausgebildeten Zwischenraum und mindestens ein in dem Zwischenraum angeordnetes Heizelement aufweist.

Ein solcher Spelsentransportbehälter ist beispielsweise aus der DE 297 18 827 U1 bekannt und dient dazu, erwärmte bzw. warmzuhaltende Speisen zu Ausgabestellen in Krankenhäusern, Altenheimen, Kantinenbetrieben oder ähnlichem zu transportieren.

Bei dem aus der DE 297 18 827 U1 bekannten Speisentransportbehälter sind die der Außenschale zugewandten Außenseiten der Innenschale mit flächigen Heizelementen versehen, welche aus mäanderförmig verlegter, dünner Drahtlitze gebildet ist, die mit einem elektrisch nicht-leitenden Flachmaterial-Träger verbunden ist.

Die mit einem flächigen Heizelement aus dünner Drahtlitze erzielbaren Heizleistungen sind beschränkt. Ferner kann es durch Drahtbrüche der dünnen Drahtlitze zum Ausfall eines solchen flächigen Heizelements kommen.

Die DE 75 27 531 U offenbart einen Flaschenwärmer mit den Merkmalen des Oberbegriffs von Anspruch 1.

Der vorliegenden Erfindung liegt die Aufgabe zugrunde, einen Speisentransportbehälter der eingangs genannten Art zu schaffen, welcher ein leistungsfähiges und zuverlässiges Heizsystem aufweist.

Diese Aufgabe wird durch einen Speisentransportbehälter nach Anspruch 1 gelöst.

Dadurch, dass das Heizelement bei dem erfindungsgemäßen Speisentransportbehälter in eine Vertiefung in der Innenschale eingelegt wird, wird die für den Wärmeübergang von dem Heizelement zu der Innenschale zur Verfügung stehende Kontaktfläche vergrößert, so dass die Innenschale in kurzer Zeit auf die gewünschte Temperatur gebracht werden kann.

Der erfindungsgemäße Speisentransportbehälter umfasst vorzugsweise mindestens ein Heizelement, das als Heizdraht ausgebildet ist.

Um die mechanische Beständigkeit des Heizdrahts zu erhöhen und insbesondere Drahtbrüche zu vermeiden, weist der Heizdraht einen Durchmesser von mindestens ungefähr 2 mm, vorzugsweise von mindestens ungefähr 3 mm, auf.

Da der Heizdraht zumindest teilweise in die mindestens eine Vertiefung an der Außenseite der Innenschale eingelegt wird, ist trotz des vergleichsweise großen Durchmessers des Heizdrahtes ein guter Wärmeübergang von dem Heizdraht auf die Innenschale gewährleistet.

Bei einer bevorzugten Ausgestaltung der Erfindung ist vorgesehen, dass der Heizdraht eine Seele, vorzugsweise aus einem Glasfasermaterial, umfasst.

Ferner weist der Heizdraht vorteilhafterweise eine Heizdrahtwendel auf, welche im Betrieb des Speisentransportbehälters von einem elektrischen Strom durchflossen wird, um die Innenschale und damit den Innenraum des Speisentransportbehälters mittels elektrischer Widerstandsheizung zu beheizen.

Die Heizdrahtwendel kann insbesondere um die Seele des Heizdrahts herum gewickelt sein.

Bei einer bevorzugten Ausgestaltung der Erfindung ist vorgesehen, daß der Heizdraht einen Mantel aus einem elektrisch isolierenden Material, beispielsweise aus Silikon, umfaßt.

In diesen elektrisch isolierenden Mantel kann insbesondere die Heizdrahtwendel eingebettet sein, so daß die Heizdrahtwendel besonders gut gegen externe Einflüsse abgeschirmt ist.

Ferner kann vorgesehen sein, daß der Heizdraht an seiner Außenseite einen elektrischen Leiter umfaßt.

Vorzugsweise ist vorgesehen, daß der elektrische Leiter an der Außenseite des Heizdrahts als ein Drahtgeflecht ausgebildet ist.

Besonders günstig ist es, wenn der Heizdraht einen im Betriebszustand des Speisentransportbehälters geerdeten elektrischen Leiter umfaßt.

Insbesondere kann der Heizdraht von einem metallischen Drahtgeflecht umgeben sein, welches im Betriebszustand des Speisentransportbehälters geerdet wird.

Aufgrund der Verwendung eines Heizdrahts, der an seiner Außenseite einen geerdeten elektrischen Leiter aufweist, kann der Speisentransportbehälter in die VDE-Schutzklasse I eingeordnet werden.

Um einen besonders guten Kontakt zwischen dem Heizelement und der Innenschale zu gewährleisten, ist vorteilhafterweise vorgesehen, daß mindestens ein Abschnitt des Heizelements mit mindestens ungefähr einem Drittel seines Querschnitts in der Vertiefung aufgenommen ist.

Besonders günstig ist es, wenn mindestens ein Abschnitt des Heizelements mit mindestens der Hälfte seines Querschnitts in der Vertiefung aufgenommen ist.

Um einen guten Wärmeübergang zu der Innenschale zu erreichen, ist der Querschnitt der Vertiefung vorzugsweise so ausgebildet, daß der in die Vertiefung eingelegte Abschnitt des Heizelements über mindestens ein Drittel seines Umfangs an der Oberfläche der Vertiefung anliegt.

Die mindestens eine Vertiefung ist vorzugsweise als eine sich in einer Längsrichtung erstreckende Nut oder Rille ausgebildet.

In eine solche Vertiefung kann ein lineares Heizelement, insbesondere ein Heizdraht, eingelegt werden.

Wenn die Innenschale im wesentlichen quaderförmig ausgebildet ist, so erstreckt sich die mindestens eine Vertiefung vorzugsweise im wesentlichen parallel zu einer Kante der im wesentlichen quaderförmigen Innenschale.

Bei einer bevorzugten Ausgestaltung der Erfindung ist vorgesehen, daß die Innenschale an ihrer Außenseite mit einer Mehrzahl von im wesentlichen parallel zueinander ausgerichteten Vertiefungen, vorzugsweise mit mindestens acht parallel zueinander ausgerichteten Vertiefungen, versehen ist.

In diesem Fall ist es besonders günstig, wenn das Heizelement mäanderförmig durch mehrere solche Vertiefungen verläuft.

Wenn die Innenschale im wesentlichen quaderförmig ausgebildet ist, so ist es für eine gute Heizwirkung von Vorteil, wenn mindestens zwei Außenflächen der Innenschale, vorzugweise mindestens drei Außenfläche der Innenschale, mit jeweils mindestens einer Vertiefung zur Aufnahme eines Heizelements versehen sind.

Um eine sichere Fixierung des Heizelements an der Innenschale zu erzielen, ist es von Vorteil, dass das in der Vertiefung aufgenommene Heizelement auf seiner der Vertiefung abgewandten Seite durch eine Abdeckung abgedeckt ist.

Die Abdeckung kann insbesondere als ein sich längs der Vertiefung erstreckendes Profil mit einem in der Längsrichtung des Profils im wesentlichen konstanten Querschnitt ausgebildet sein.

Um einen guten Wärmeübergang auf die Abdeckung zu erzielen, ist es günstig, wenn der Querschnitt der Abdeckung so ausgebildet ist, dass der abgedeckte Abschnitt des Heizelements, vorzugsweise über mindestens ein Drittel seines Umfangs, an der Abdeckung anliegt.

Die Abdeckung ist vorzugsweise aus einem Kunststoffmaterial ausgebildet.

Besonders günstig ist es, wenn die Abdeckung aus demselben Kunststoffmaterial gebildet ist, aus welchem die Innenschale gebildet ist. In diesem Fall kann die Abdeckung besonders einfach mit der Innenschale verschweißt werden.

Um eine sichere Fixierung des Heizelements an der Innenschale zu erzielen, ist die Abdeckung, vorzugsweise durch Verschweißen, an der Innenschale festgelegt.

Um Wärmeverluste weitgehend zu vermeiden, kann vorgesehen sein, daß in dem Zwischenraum zwischen der Abdeckung und der Außenschale ein Wärmedämmaterial angeordnet ist.

Dieses Wärmedämmaterial kann insbesondere einen Kunststoffschaum, vorzugsweise einen Polyurethanschaum, umfassen.

Weitere Merkmale und Vorteile der Erfindung sind Gegenstand der nachfolgenden Beschreibung eines Ausführungsbeispiels.

In den Zeichnungen zeigen:
- Fig. 1: eine schematische perspektivische Darstellung eines Speisentransportbehälters, der an seiner Vorderseite durch einen Deckel verschlossen ist;
- Fig. 2: eine schematische Vorderansicht des Speisentransportbehälters aus Fig. 1;
- Fig. 3: eine schematische Draufsicht von oben auf den Speisentransportbehälter aus den Fig. 1 und 2;
- Fig. 4: eine schematische Seitenansicht des Speisentransportbehälters aus den Fig. 1 bis 3, mit Blickrichtung in Richtung der Pfeile 4 in den Fig. 2 und 3;
- Fig. 5: eine schematische perspektivische Darstellung einer Innenschale des Speisentransportbehälters aus den Fig. 1 bis 4;
- Fig. 6: eine vergrößerte Darstellung des Bereichs I aus Fig. 5;
- Fig. 7: ein schematischer vertikaler Schnitt durch die Innenschale aus Fig. 5;
- Fig. 8: eine schematische Draufsicht von oben auf die Innenschale aus den Fig. 5 bis 7, wobei in der linken Hälfte von Fig. 8 eine Abdeckung eines mäanderförmig verlaufenden Heizdrahtes dargestellt ist und in der rechten Hälfte von Fig. 8 der mäanderförmig verlaufende Heizdraht ohne die Abdeckung dargestellt ist;
- Fig. 9: eine vergrößerte Darstellung des Bereichs II aus Fig. 8;
- Fig. 10: eine schematische perspektivische Darstellung eines Heizdrahts;
- Fig. 11: einen schematischen Querschnitt durch eine Innenschale, einen Heizdraht, eine Abdeckung, eine Außenschale und eine mit Wärmedämmaterial gefüllten Zwischenraum zwischen der Innenschale und der Abdeckung einerseits und der Außenschale andererseits; und
- Fig. 12: eine schematische Draufsicht von oben auf die Innenschale aus den Fig. 5 bis 8, ohne die Abdeckung und ohne den Heizdraht.

Gleiche oder funktional äquivalente Elemente sind in allen Figuren mit denselben Bezugszeichen bezeichnet.

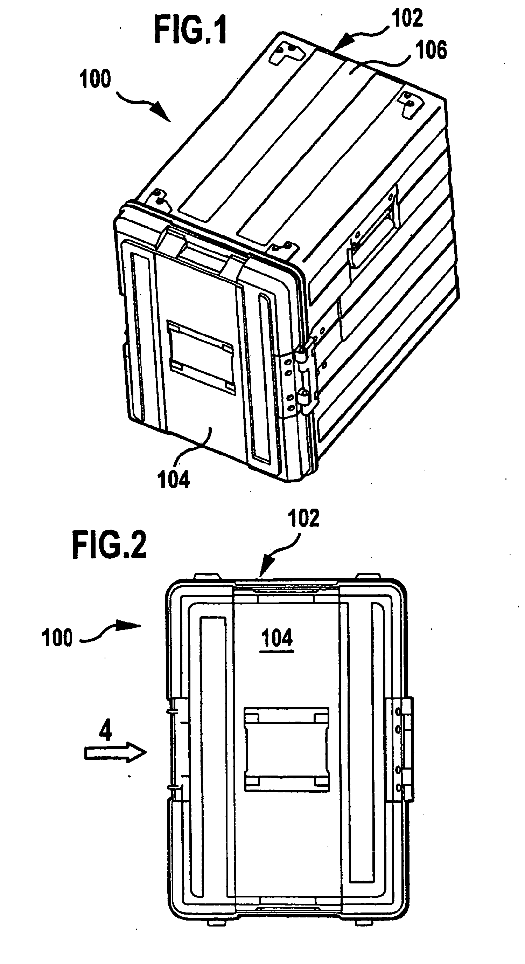

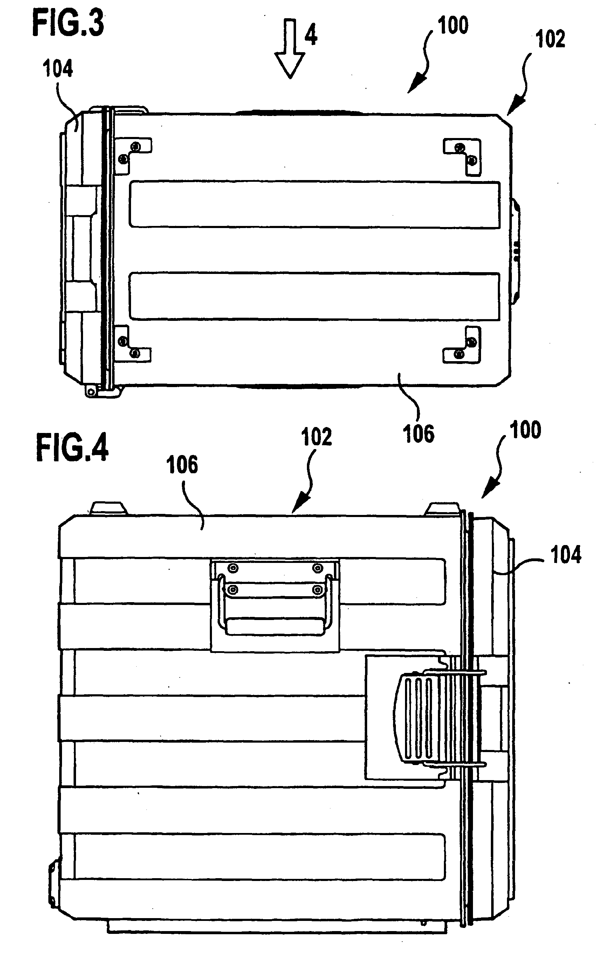

Ein in den Fig. 1 bis 11 dargestellter, als Ganzes mit 100 bezeichneter Speisentransportbehälter umfaßt einen im wesentlichen quaderförmigen Behälterkorpus 102, der an seiner Vorderseite eine Beschickungs- und Entnahmeöffnung aufweist, welche mittels eines Deckels 104 verschließbar ist.

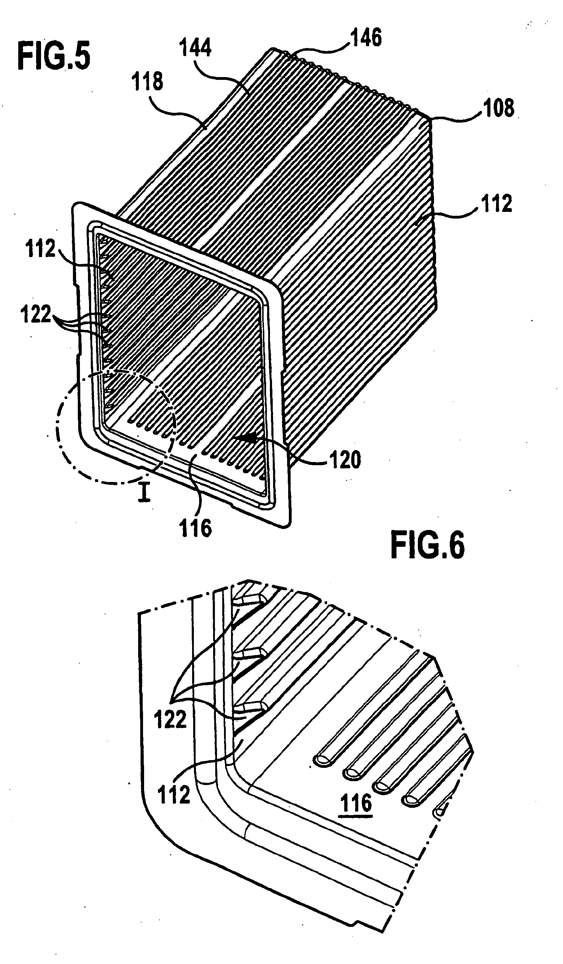

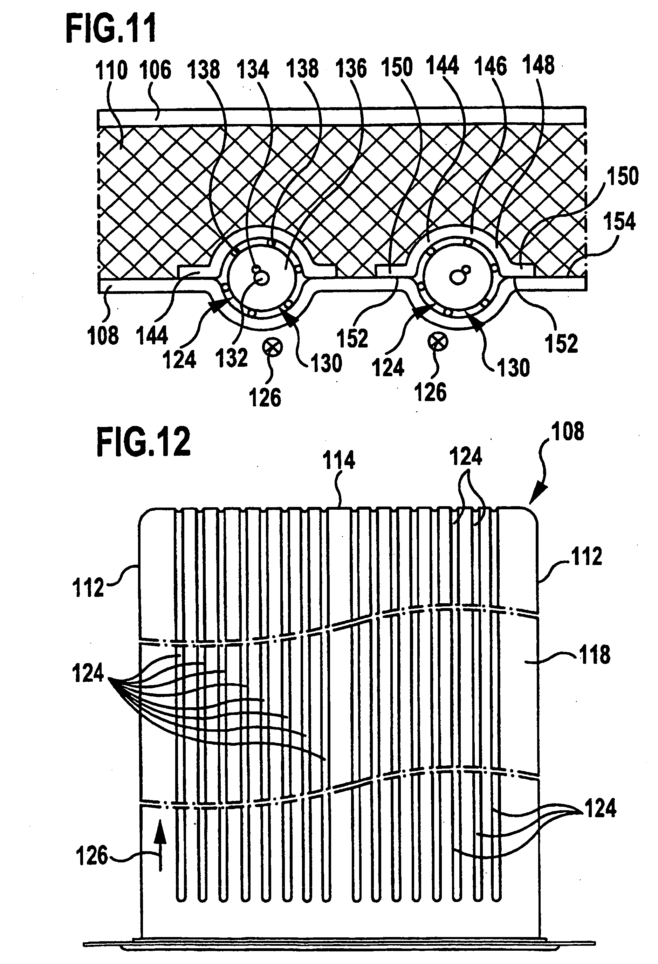

Der Behälterkorpus 102 umfaßt eine Außenschale 106 und eine in den Fig. 5 bis 9 einzeln dargestellte Innenschale 108, welche beide ungefähr quaderförmige Gestalt aufweisen und so miteinander verbunden sind, daß sie zwischen sich einen flüssigkeitsdichten Zwischenraum 110 ausbilden (siehe Fig. 11).

Die Außenschale 106 kann aus einem beliebigen Material, beispielsweise aus einem metallischen Material, insbesondere Edelstahl, oder aus einem Kunststoffmaterial, insbesondere Polypropylen, gebildet sein.

Die Innenschale 108 ist aus einem Kunststoffmaterial, vorzugsweise aus Polypropylen, gebildet.

Ebenso wie die Außenschale 106 umfaßt die Innenschale 108 fünf Wände, nämlich zwei einander gegenüberliegende vertikale Seitenwände 112, eine vertikale Rückwand 114, eine Bodenwand 116 und eine Deckenwand 118.

Jede der Seitenwände 112 ist an ihrer dem Innenraum 120 der Innenschale 108 zugewandten Innenseite mit einer Reihe von horizontal verlaufenden und in vertikaler Richtung im Abstand voneinander angeordneten Rippen 122 versehen, welche Auflagen für durch die Beschickungs- und Entnahmeöffnung in den Behälterkorpus 102 einschiebbare Tabletts, Fachböden oder Gastronorm-Behälter bilden.

Die Deckenwand 118, die Rückwand 114 und die Bodenwand 116 sind an ihren dem Innenraum 120 der Innenschale 108 abgewandten Außenseiten jeweils mit mehreren, beispielsweise mit jeweils 16, parallel zu den Kanten der Innenschale 108 verlaufenden Vertiefungen 124 versehen, welche jeweils die Form einer sich in einer Längsrichtung 126 erstreckenden Rille oder Nut mit einem im wesentlichen kreisabschnittsförmigen, insbesondere im wesentlichen halbkreisförmigen, Querschnitt aufweisen.

Diese Vertiefungen 124 erstrecken sich über jeweils im wesentlichen die gesamte Länge der betreffenden Wand 114, 116 bzw. 118.

Jede der Vertiefungen 124 an der Außenseite der Deckenwand 118 ist an ihrem rückwärtigen Ende über einen gekrümmten Vertiefungsabschnitt 128 mit jeweils einer Vertiefung 124 an der Außenseite der Rückwand 114 verbunden.

In entsprechender Weise ist jede Vertiefung 124 an der Außenseite der Bodenwand 116 an ihrem rückwärtigen Ende über jeweils einen gekrümmten Vertiefungsabschnitt 128 mit jeweils einer der Vertiefungen 124 an der Außenseite der Rückwand 114 verbunden.

Wie am besten aus den Fig. 5, 6 und 11 zu ersehen ist, sind die Innenseiten der Rückwand 114, der Bodenwand 116 und der Deckenwand 118 an den Stellen, an welchen auf der Außenseite der betreffenden Wände die Vertiefungen 124 angeordnet sind, in den Innenraum 120 vorgewölbt.

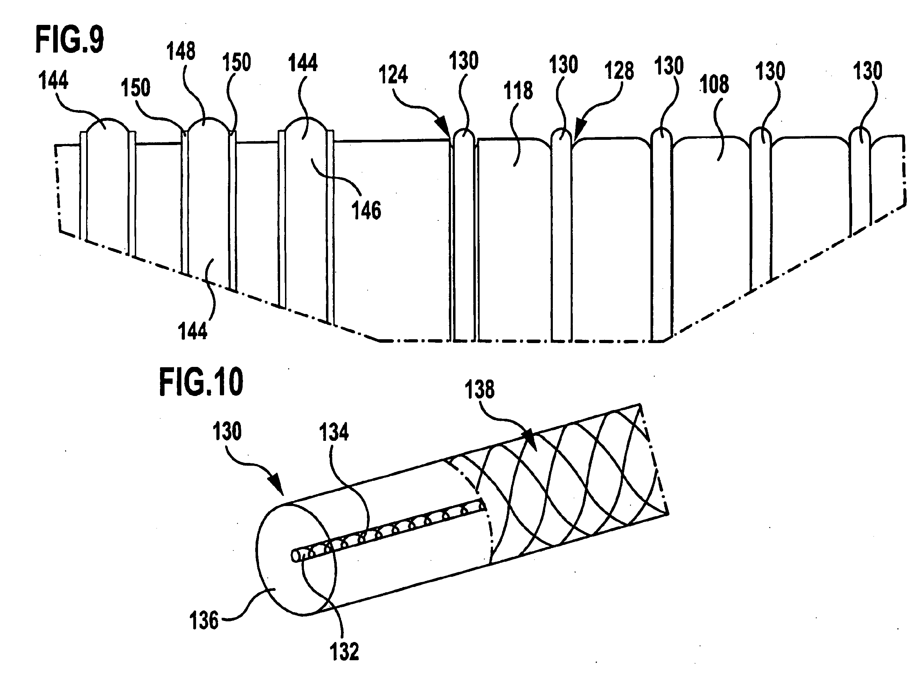

In die Vertiefungen 124 an den Außenseiten der Wände 114, 116 und 118 der Innenschale 108 ist ein Heizdraht 130 eingelegt, dessen Aufbau am besten aus den Fig. 10 und 11 zu ersehen ist.

Der Heizdraht 130 umfaßt eine sich in der Längsrichtung des Heizdrahts 130 erstreckende, zylindrische Seele 132, welche vorzugsweise aus einer Glasfaser gebildet ist.

Um die Seele 132 ist eine Heizdrahtwendel 134 aus elektrisch leitfähigem Material, beispielsweise aus Eisen, aus einer Kupfer-Nickel-Legierung oder aus einer Konstantan-Legierung, gewickelt.

Diese Heizdrahtwendel 134 wird im Betrieb des Speisentransportbehälters 100 von einem elektrischen Strom durchflossen, um die Innenschale 108 und damit den Innenraum 120 des Speisentransportbehälters 100 mittels elektrischer Widerstandsheizung zu beheizen.

Die Heizdrahtwendel 134 und die Seele 132 sind in einen Mantel 136 aus einem elektrisch isolierenden Material, beispielsweise aus Silikon, eingebettet.

Auf der zylindrischen Außenseite des Mantels 136 ist ein Drahtgeflecht 138 aus einem elektrisch leitenden Material, insbesondere aus einem metallischen Material, angeordnet.

Dieses Drahtgeflecht 138 wird im Betrieb des Speisentransportbehälters 100 geerdet, wodurch die Betriebssicherheit der elektrischen Widerstandsheizung des Speisentransportbehälters 100 wesentlich erhöht wird.

Aufgrund der Verwendung eines Heizdrahts 130, der an seiner Außenseite einen geerdeten elektrischen Leiter aufweist, kann der Speisentransportbehälter 100 in die VDE-Schutzklasse I eingeordnet werden.

Der Gesamtdurchmesser des Heizdrahts 130 beträgt vorzugsweise ungefähr 3 mm bis ungefähr 4 mm.

Wie aus Fig. 11 zu ersehen ist, wird der Heizdraht 130 so von den Vertiefungen 124 aufgenommen, daß er mit ungefähr der Hälfte seines Querschnitts innerhalb der Vertiefungen 124 verläuft und die andere Hälfte seines Querschnitts über die Vertiefungen 124 übersteht.

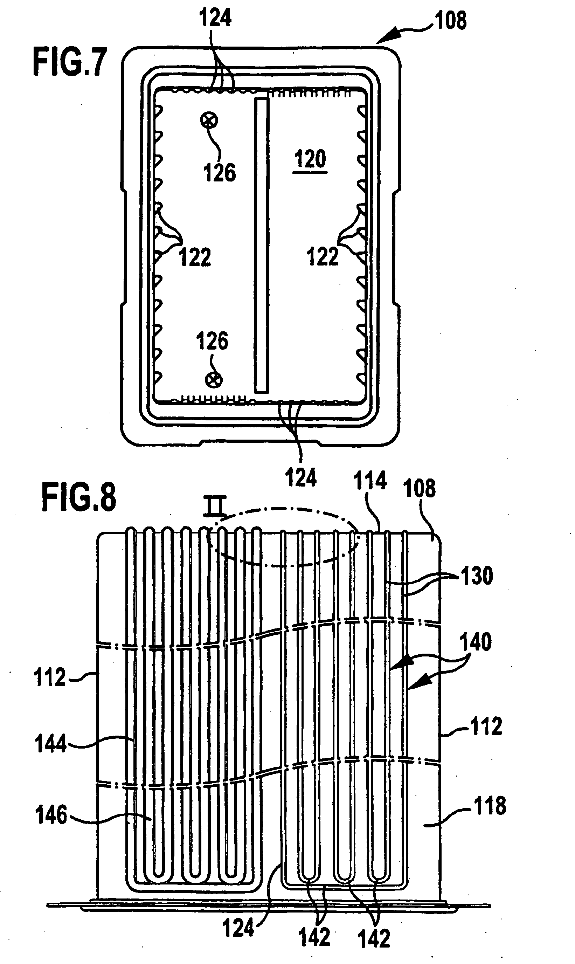

Wie am besten aus Fig. 8 zu ersehen ist, verläuft der Heizdraht 130 mäanderförmig durch alle Vertiefungen 124, wobei geradlinig verlaufende Abschnitte 140 des Heizdrahts 130, die in den Vertiefungen 124 aufgenommen sind, an ihren Enden über jeweils einen gebogenen Abschnitt 142 des Heizdrahts 130, welcher außerhalb der Vertiefungen 124 verläuft, mit jeweils einem in einer anderen Vertiefung 124 aufgenommenen geradlinigen Abschnitt 140 des Heizdrahts 130 verbunden sind.

Um eine sichere Fixierung des Heizdrahts 130 an der Innenschale 108 zu erzielen, ist eine Abdeckung 144 vorgesehen, welche die Gestalt eines sich in Längsrichtung des Heizdrahts 130 erstreckenden Profils mit einem im wesentlichen konstanten Querschnitt aufweist.

Der Querschnitt des Profils 146 umfaßt einen mittigen, im wesentlichen halbkreisringförmigen Abschnitt 148, von dessen beiden Enden sich jeweils ein Flanschabschnitt 150 in radialer Richtung nach außen von dem mittigen Abschnitt 148 weg erstreckt (siehe Fig. 11).

Die Unterseiten 152 der Flanschabschnitte 150 des Profils 146 liegen an der Außenseite 154 der Innenschale 108 flächig an und sind an derselben festgelegt.

Die Festlegung des Profils 146 an der Innenschale 108 kann beispielsweise durch Verschweißen, insbesondere durch Heißgasschweißen, vorzugsweise mit heißer Luft, erfolgen.

Das Profil 146 ist aus einem Kunststoffmaterial, vorzugsweise aus demselben Kunststoffmaterial wie die Innenschale 108, gebildet.

Insbesondere kann vorgesehen sein, daß das Profil 146 aus Polypropylen gebildet ist.

Wie aus der linken Hälfte der Fig. 8 zu ersehen ist, überdeckt die Abdeckung 144 auch die außerhalb der Vertiefungen 124 angeordneten gebogenen Abschnitte 142 des Heizdrahts 130.

Der Heizdraht 130 ist in dem Zwischenraum zwischen der Oberseite der Vertiefung 124 und der Unterseite des Profils 146 flüssigkeitsdicht eingeschlossen und liegt mit seiner Außenseite an der Oberseite der Vertiefung 124 und an der Unterseite des Profils 146 an, so daß ein guter Wärmeübergang aus dem Heizdraht 130 auf die Innenschale 108 und das Profil 146 gewährleistet ist.

Der Zwischenraum 110 zwischen der Außenschale 106 einerseits und der Innenschale 108 sowie der Abdeckung 144 andererseits ist mit einem Wärmedämmaterial 156 ausgefüllt.

Das Wärmedämmaterial kann ein Kunststoffschaum, insbesondere ein Polyurethanschaum, sein.

Vorzugsweise wird der Zwischenraum 110 mit dem Wärmedämmaterial 156 ausgeschäumt, nachdem der Heizdraht 130 und die Abdeckung 144 an der Innenschale 108 festgelegt und die Innenschale 108 in der Außenschale 106 angeordnet worden ist.

Durch die Abdeckung 144 wird beim Ausschäumen des Zwischenraums 110 verhindert, daß aufgeschäumtes Wärmedämmaterial 156 in Kontakt mit dem Heizdraht 130 gelangen kann. Dadurch wird eine lokale Überhitzung des Wärmedämmaterials 156 im Betrieb des Speisentransportbehälters 100 vermieden.

Außerdem wird so verhindert, daß sich das Wärmedämmaterial 156 an Stellen lokaler Überhitzung unter Blasenbildung von der Außenseite 154 der Innenschale 108 ablöst.

Der Heizdraht 130 ist an eine in die Außenschale 106 eingebaute (nicht dargestellte) Steckdose angeschlossen, über die sich der Heizdraht 130 mit einer Stromquelle verbinden läßt.

Die elektrische Widerstandsheizung des Speisentransportbehälters 100 kann statt eines einzigen Heizdrahts 130 auch mehrere Heizdrähte 130 umfassen, welche in Serie oder parallel geschaltet sein können.

Ferner kann der Speisentransportbehälter 100 einen Temperaturfühler zur Erfassung der im Innenraum 120 herrschenden Temperatur, ein Einstellelement zur Vorwahl der im Innenraum 120 durch die elektrische Widerstandsheizung zu erzeugenden Temperatur sowie die für eine Einregelung dieser Temperatur erforderlichen Schaltelemente umfassen.

## Patentansprüche

1. Speisentransportbehälter, umfassend einen Behälterkorpus (102), der eine Innenschale (108), welche einen Behälterinnenraum (120) begrenzt, eine Außenschale (106), einen zwischen der Innenschale (108) und der Außenschale (106) ausgebildeten Zwischenraum (110) und mindestens ein in dem Zwischenraum (110) angeordnetes Heizelement aufweist,
wobei die Innenschale (108) an ihrer der Außenschale (106) zugewandten Außenseite (154) mit mindestens einer Vertiefung (124) zur zumindest teilweisen Aufnahme des Heizelements versehen ist,
**dadurch gekennzeichnet,**
**dass** die Innenschale (108) aus einem Kunststoffmaterial gebildet ist und dass das in der Vertiefung (124) aufgenommene Heizelement auf seiner der Vertiefung abgewandten Seite durch eine Abdeckung (144) abgedeckt ist, wobei die Abdeckung (144) an der Innenschale (108) festgelegt ist.

2. Speisentransportbehälter nach Anspruch 1, **dadurch gekennzeichnet, dass** der Speisentransportbehälter (100) mindestens ein Heizelement umfasst, das als Heizdraht (130) ausgebildet ist.

3. Speisentransportbehälter nach Anspruch 2, **dadurch gekennzeichnet, dass** der Heizdraht (130) einen Durchmesser von mindestens ungefähr 2 mm, vorzugsweise von mindestens ungefähr 3 mm, aufweist.

4. Speisentransportbehälter nach einem der Ansprüche 2 oder 3, **dadurch gekennzeichnet, dass** der Heizdraht (130) eine Seele (132), vorzugsweise aus einem Glasfasermaterial, umfasst.

5. Speisentransportbehälter nach einem der Ansprüche 2 bis 4, **dadurch gekennzeichnet, dass** der Heizdraht (130) eine Heizdrahtwendel (134) umfasst.

6. Speisentransportbehälter nach einem der Ansprüche 2 bis 5, **dadurch gekennzeichnet, dass** der Heizdraht (130) einen Mantel (136) aus einem elektrisch isolierenden Material, beispielsweise aus Silikon, umfasst.

7. Speisentransportbehälter nach einem der Ansprüche 2 bis 6, **dadurch gekennzeichnet, dass** der Heizdraht (130) an seiner Außenseite einen elektrischen Leiter umfasst.

8. Speisentransportbehälter nach Anspruch 7, **dadurch gekennzeichnet, dass** der elektrische Leiter an der Außenseite des Heizdrahts (130) als ein Drahtgeflecht (138) ausgebildet ist.

9. Speisentransportbehälter nach einem der Ansprüche 2 bis 8, **dadurch gekennzeichnet, dass** der Heizdraht (130) einen im Betriebszustand des Speisentransportbehälters (100) geerdeten elektrischen Leiter umfasst.

10. Speisentransportbehälter nach einem der Ansprüche 1 bis 9, **dadurch gekennzeichnet, dass** mindestens ein Abschnitt (140) des Heizelements mit mindestens ungefähr einem Drittel seines Querschnitts in der Vertiefung (124) aufgenommen ist.

11. Speisentransportbehälter nach einem der Ansprüche 1 bis 10, **dadurch gekennzeichnet, dass** die mindestens eine Vertiefung (124) als eine sich in einer Längsrichtung (126) erstreckende Nut oder Rille ausgebildet ist.

12. Speisentransportbehälter nach einem der Ansprüche 1 bis 11, **dadurch gekennzeichnet, dass** die Innenschale (108) im wesentlichen quaderförmig ausgebildet ist und die mindestens eine Vertiefung (124) sich im wesentlichen parallel zu einer Kante der im wesentlichen quaderförmigen Innenschale (108) erstreckt.

13. Speisentransportbehälter nach einem der Ansprüche 1 bis 12, **dadurch gekennzeichnet, dass** die Innenschale (108) an ihrer Außenseite (154) mit einer Mehrzahl von im wesentlichen parallel zueinander ausgerichteten Vertiefungen (124), vorzugsweise mit mindestens acht parallel zueinander ausgerichteten Vertiefungen, versehen ist.

14. Speisentransportbehälter nach Anspruch 13, **dadurch gekennzeichnet, dass** das Heizelement mäanderförmig durch mehrere Vertiefungen (124) verläuft.

15. Speisentransportbehälter nach einem der Ansprüche 13 oder 14, **dadurch gekennzeichnet, dass** die Innenschale (108) im wesentlichen quaderförmig ausgebildet ist und mindestens zwei Außenflächen der Innenschale (108), vorzugsweise mindestens drei Außenflächen der Innenschale (108), mit jeweils mindestens einer Vertiefung (124) zur Aufnahme eines Heizelements versehen sind.

16. Speisentransportbehälter nach einem der Ansprüche 1 bis 15, **dadurch gekennzeichnet, dass** die Abdeckung (144) als ein sich längs der Vertiefung (124) erstreckendes Profil (146) mit einem in der Längsrichtung des Profils (146) im wesentlichen konstanten Querschnitt ausgebildet ist.

17. Speisentransportbehälter nach einem der Ansprüche 1 bis 16, **dadurch gekennzeichnet, dass** die Abdeckung (144) aus einem Kunststoffmaterial ausgebildet ist.

18. Speisentransportbehälter nach Anspruch 17, **dadurch gekennzeichnet, dass** die Abdeckung (144) aus demselben Kunststoffmaterial gebildet ist, aus welchem die Innenschale (108) gebildet ist.

19. Speisentransportbehälter nach einem der Ansprüche 1 bis 18, **dadurch gekennzeichnet, dass** die Abdeckung (144) durch Verschweißen an der Innenschale (108) festgelegt ist.

20. Speisentransportbehälter nach einem der Ansprüche 1 bis 19, **dadurch gekennzeichnet, dass** in dem Zwischenraum (110) zwischen der Abdeckung (144) und der Außenschale (106) ein Wärmedämmmaterial (156) angeordnet ist.

21. Speisentransportbehälter nach Anspruch 20, **dadurch gekennzeichnet, dass** das Wärmedämmmaterial (156) einen Kunststoffschaum, vorzugsweise einen Polyurethanschaum, umfasst.

## Claims

1. A food transport container comprising a container body (102) which comprises an inner shell (108) bounding a space in the interior of the container (120), an outer shell (106), a gap (110) formed between the inner shell (108) and the outer shell (106) and at least one heating element arranged in the gap (110),
wherein the inner shell (108) is provided in the outer surface (154) thereof facing the outer shell (106) with at least one depression (124) for at least partially accommodating the heating element,
**characterized in that** the inner shell (108) is formed of a synthetic material and **in that** the heating element accommodated in the depression (124) is covered by a cover (144) on the side thereof remote from the depression, wherein the cover (144) is fixed to the inner shell (108).

2. A food transport container in accordance with Claim 1, **characterized in that** the food transport container (100) comprises at least one heating element which is in the form of a heating wire (130).

3. A food transport container in accordance with Claim 2, **characterized in that** the heating wire (130) has a diameter of at least approximately 2 mm, preferably of at least approximately 3 mm.

4. A food transport container in accordance with either of Claims 2 or 3, **characterized in that** the heating wire (130) comprises a core (132), preferably consisting of a glass fibre material.

5. A food transport container in accordance with any of the Claims 2 to 4, **characterized in that** the heating wire (130) comprises a heating wire coil (134).

6. A food transport container in accordance with any of the Claims 2 to 5, **characterized in that** the heating wire (130) comprises a coating (136) of an electrically insulating material, of silicone for example.

7. A food transport container in accordance with any of the Claims 2 to 6, **characterized in that** the heating wire (130) comprises an electrical conductor on the outer surface thereof.

8. A food transport container in accordance with Claim 7, **characterized in that** the electrical conductor on the outer surface of the heating wire (130) is in the form of a wire mesh (138).

9. A food transport container in accordance with any of the Claims 2 to 8, **characterized in that** the heating wire (130) comprises an electrical conductor which is earthed in the operative state of the food transport container (100).

10. A food transport container in accordance with any of the Claims 1 to 9, **characterized in that** at least one section (140) of the heating element is accommodated in the depression (124) to at least approximately one third of its cross section.

11. A food transport container in accordance with any of the Claims 1 to 10, **characterized in that** the at least one depression (124) is in the form of a groove or channel extending in a longitudinal direction (126).

12. A food transport container in accordance with any of the Claims 1 to 11, **characterized in that** the inner shell (108) is substantially cuboidal and the at least one depression (124) extends substantially parallel to an edge of the substantially cuboidal inner shell (108).

13. A food transport container in accordance with any of the Claims 1 to 12, **characterized in that** the outer surface (154) of the inner shell (108) is provided with a plurality of substantially mutually parallel aligned depressions (124), preferably with at least eight mutually parallel aligned depressions.

14. A food transport container in accordance with Claim 13, **characterized in that** the heating element runs through a plurality of depressions (124) in meandering manner.

15. A food transport container in accordance with either of Claims 13 or 14, **characterized in that** the inner shell (108) is substantially cuboidal and at least two outer surfaces of the inner shell (108) and preferably at least three outer surfaces of the inner shell (108) are each provided with at least one depression (124) for the accommodation of a heating element.

16. A food transport container in accordance with any of the Claims 1 to 15, **characterized in that** the cover (144) is in the form of a profile (146) extending along the depression (124), the cross section thereof being substantially constant in the longitudinal direction of the profile (146).

17. A food transport container in accordance with any of the Claims 1 to 16, **characterized in that** the cover (144) is made of a synthetic material.

18. A food transport container in accordance with Claim 17, **characterized in that** the cover (144) is made of the same synthetic material as that from which the inner shell (108) is formed.

19. A food transport container in accordance with any of the Claims 1 to 18, **characterized in that** the cover (144) is fixed to the inner shell (108) by welding.

20. A food transport container in accordance with any of the Claims 1 to 19, **characterized in that** a thermally insulating material (156) is arranged in the gap (110) between the cover (144) and the outer shell (106).

21. A food transport container in accordance with Claim 20, **characterized in that** the thermally insulating material (156) comprises a plastics foam, preferably, a polyurethane foam.

## Revendications

1. Conteneur pour le transport de repas, comprenant un corps de conteneur (102), présentant une enveloppe intérieure (108) qui délimite un espace intérieur (120) du conteneur, une enveloppe extérieure (106), un espace intermédiaire (110) formé entre l'enveloppe intérieure (108) et l'enveloppe extérieure (106) et au moins un élément chauffant placé dans l'espace intermédiaire (110),
où l'enveloppe intérieure (108) est munie, sur sa face extérieure (154) dirigée vers l'enveloppe extérieure (106), d'au moins un creux (124) destiné à recevoir au moins en partie de l'élément chauffant,
**caractérisé en ce que** l'enveloppe intérieure (108) est formée d'un matériau synthétique et que l'élément chauffant inséré dans le creux (124) est recouvert d'un couvercle (144) sur son côté opposé au creux, le couvercle (144) étant fixé à l'enveloppe intérieure (108).

2. Conteneur suivant la revendication 1, **caractérisé en ce que** le conteneur pour le transport de repas (100) comprend au moins un élément chauffant, lequel est configuré en fil de chauffage (130).

3. Conteneur pour le transport de repas suivant la revendication 2, **caractérisé en ce que** le fil de chauffage (130) présente un diamètre d'au moins environ 2 mm, de préférence d'au moins environ 3 mm.

4. Conteneur pour le transport de repas suivant l'une quelconque des revendications 2 ou 3, **caractérisé en ce que** le fil de chauffage (130) comprend une âme (132), de préférence en un matériau à base de fibres de verre.

5. Conteneur pour le transport de repas suivant l'une quelconque des revendications 2 à 4, **caractérisé en ce que** le fil de chauffage (130) comprend une spirale de fil chauffant (134).

6. Conteneur pour le transport de repas suivant l'une quelconque des revendications 2 à 5, **caractérisé en ce que** le fil de chauffage (130) comprend un manteau (136) en un matériau électriquement isolant, par exemple en silicone.

7. Conteneur pour le transport de repas suivant l'une quelconque des revendications 2 à 6, **caractérisé en ce que** le fil de chauffage (130) présente à sa face extérieure un conducteur électrique.

8. Conteneur pour le transport de repas suivant la revendication 7, **caractérisé en ce que** le conducteur électrique sur le côté extérieur du fil de chauffage (130) est configuré en treillis.

9. Conteneur pour le transport de repas suivant l'une quelconque des revendications 2 à 8, **caractérisé en ce que** le fil de chauffage (130) comprend un conducteur électrique mis à la masse à l'état de fonctionnement du conteneur pour le transport de repas (100).

10. Conteneur pour le transport de repas suivant l'une quelconque des revendications 1 à 9, **caractérisé en ce qu'**au moins une section (140) de l'élément chauffant est insérée dans le creux (124) sur au moins environ un tiers de sa section transversale.

11. Conteneur pour le transport de repas suivant l'une quelconque des revendications 1 à 10, **caractérisé en ce qu'**au moins un creux (124) est configuré en une rainure ou une gorge s'étendant dans une direction longitudinale (126).

12. Conteneur pour le transport de repas suivant l'une quelconque des revendications 1 à 11, **caractérisé en ce que** l'enveloppe intérieure (108) est de forme sensiblement parallélépipédique et que le au moins un creux (124) s'étend sensiblement parallèlement à un bord de l'enveloppe intérieure essentiellement parallélépipédique (108).

13. Conteneur pour le transport de repas suivant l'une quelconque des revendications 1 à 12, **caractérisé en ce que** l'enveloppe intérieure (108) est munie, sur sa face extérieure (154), d'une multiplicité de creux (124) essentiellement orientés parallèlement les uns aux autres, de préférence au moins huit creux orientés parallèlement les uns aux autres.

14. Conteneur pour le transport de repas suivant la revendication 13, **caractérisé en ce que** l'élément chauffant passe en méandres dans plusieurs creux (124).

15. Conteneur pour le transport de repas suivant l'une quelconque des revendications 13 ou 14, **caractérisé en ce que** l'enveloppe intérieure (108) est essentiellement de forme parallélépipédique et qu'au moins deux surfaces extérieures de l'enveloppe intérieure (108), de préférence au moins trois surfaces extérieures de l'enveloppe intérieure (108), sont à chaque fois munies d'un creux (124) destiné à recevoir un élément chauffant.

16. Conteneur pour le transport de repas suivant l'une quelconque des revendications 1 à 15, **caractérisé en ce que** le couvercle (144) est configuré en un profil (146) s'étendant le long du creux (124) avec une section transversale sensiblement constante dans la direction longitudinale du profil (146).

17. Conteneur pour le transport de repas suivant l'une quelconque des revendications 1 à 16, **caractérisé en ce que** le couvercle (144) est fait d'un matériau synthétique.

18. Conteneur pour le transport de repas suivant la revendication 17, **caractérisé en ce que** le couvercle (144) est fait du même matériau synthétique que celui de l'enveloppe intérieure (108).

19. Conteneur pour le transport de repas suivant l'une quelconque des revendications 1 à 18, **caractérisé en ce que** le couvercle (144) est fixé à l'enveloppe intérieure (108) par soudage.

20. Conteneur pour le transport de repas suivant l'une quelconque des revendications 1 à 19, **caractérisé en ce que,** dans l'espace intermédiaire (110) entre le couvercle (144) et l'enveloppe extérieure (106) est placé un matériau d'isolation thermique (156).

21. Conteneur pour le transport de repas suivant la revendication 20, **caractérisé en ce que** le matériau d'isolation thermique (156) est une mousse synthétique, de préférence une mousse de polyuréthanne.
